# EUROPEAN PATENT SPECIFICATION

(11) **EP 3 883 154 B1**
(45) Date of publication and mention of the grant of the patent: **25.06.2025**
(21) Application number: 18944729.5
(22) Date of filing: 26.12.2018
(51) Int. Cl.: H04L 12/28, H04J 3/16

(54) **DATA TRANSMISSION METHOD AND DEVICE**
DATENÜBERTRAGUNGSVERFAHREN UND -VORRICHTUNG
PROCÉDÉ ET DISPOSITIF DE TRANSMISSION DE DONNÉES

(43) Date of publication of application: 22.09.2021
(73) Proprietor: Huawei Technologies Co., Ltd., Shenzhen Guangdong 518129 (CN)
(72) Inventor: GONG, Zhaoming, Shenzhen, Guangdong 518129 (CN)
(74) Representative: Isarpatent
(86) International application number: PCT/CN2018/123825
(87) International publication number: WO 2020/132928

(56) References cited:
- CN-A- 102 118 212
- CN-A- 103 023 597
- CN-A- 106 972 906
- CN-A- 106 972 906
- CN-A- 107 770 818
- JP-A- 2003 348 129
- US-A1- 2010 080 244
- US-A1- 2013 308 945
- WEI WEI ET AL: "PONIARD: A Programmable Optical Networking Infrastructure for Advanced Research and Development of Future Internet", JOURNAL OF LIGHTWAVE TECHNOLOGY, IEEE, USA, vol. 26, no. 3, 1 February 2009 (2009-02-01), pages 233 - 242, XP011251727, ISSN: 0733-8724
- QIU YANG: "Group-based spectrum assignment in dynamic flex-grid optical networks", OPTICAL FIBER TECHNOLOGY, vol. 19, no. 5, 1 October 2013 (2013-10-01), AMSTERDAM, NL, pages 437 - 445, XP055844361, ISSN: 1068-5200, DOI: 10.1016/j.yofte.2013.05.011

## Description

### TECHNICAL FIELD

This disclosure relates to the field of optical communications technologies, and the invention in particular relates to a data transmission method, a data transmission apparatus, and a data transmission system.

### BACKGROUND

As a basic bearer network, an optical transport network (OTN) is required to be efficient and flexible. However, in specific implementation, a large quantity of bandwidth fragments exists in the optical transport network, affecting network utilization and service deployment flexibility.

Generally, an optical channel data unit (ODU) virtual concatenation technology is used to resolve the fragment problem. For example, N independent ODD frame structures whose frame headers are synchronized are multiplexed into a larger-capacity virtual container by byte, and the virtual container may be used to carry a coarse-granularity service (which may also be understood as a bandwidth-hungry service). After the coarse-granularity service is encapsulated into the virtual container, each ODU is independently transmitted. After receiving the N ODUs, a receive end restores the coarse-granularity service from the virtual container. However, when minimum container bandwidth of an OTN system is 1.24416 Gbps, virtual containers need to be concatenated at a granularity of 1.24416 Gbps, and therefore a small-bandwidth fragment cannot be used.

The paper by WEI WEI ET AL: "PONIARD: A Programmable Optical Networking Infrastructure for Advanced Research and Development of Future Internet", JOURNAL OF LIGHTWAVE TECHNOLOGY, IEEE, USA, vol. 26, no. 3, 1 February 2009 (2009-02-01), pages 233-242, XP011251727, ISSN: 0733-8724 describes an OFDMA-based network using a WDM link, which is divided into hundreds of parallel subcarriers. Shared resource provisioning is used with respect to a statistical multiplexing to all slices.

The paper by Qiu Yang: "Group-based spectrum assignment in dynamic flex-grid optical networks", Optical Fiber Technology, vol. 19, no. 5, 1 October 2013 (2013-10-01), pages 437-445, XP055844361, AMSTERDAM, NL ISSN: 1068-5200, DOI: 10.1016/j.yofte.201 3.05.011 describes spectrum assignment in an optical network and a grouping policy in the spectrum assignment is used where the whole spectrum resources are sorted into several groups according to the kinds of services. US2010/080244A1 is also relevant prior art.

### SUMMARY

The object of the present invention is to provide a data transmission method, a data transmission apparatus, and a data transmission system to effectively use a bandwidth fragment in an optical transport network and improve link bandwidth utilization. This object is solved by the method, the apparatus, and the data transmission system of the independent claims. Further advantageous embodiments and improvements of the invention are listed in the dependent claims. Hereinafter, before coming to a detailed description of the embodiments of the invention with reference to the attached drawings, aspects of the invention which contribute to the understanding of the invention are highlighted. Hereinafter, whenever there is an expression like "...aspect of the present invention" or "according to the invention", this relates to technical teaching of the broadest embodiment as claimed with the independent claims and expressions like "according to an embodiment", "optionally", "implementation", "scenario", "design", "...may further include" or similar relate to technical teaching of the further embodiments of the invention. Expressions like "according to the present disclosure" or "The present disclosure..." relates to further details and examples which are not claimed in the attached set of claims but which are useful for contributing to the understanding of the invention as claimed with the attached claims set. The following aspects do not define the invention, that is defined in the independent claims.

According to a first aspect according to the invention, the invention provides a data transmission method. The method is applied to an optical transport network, and the method includes: determining total bandwidth of N slice containers based on a reference unit, where the reference unit is minimum bandwidth of a service of transmitting data, the total bandwidth of the N slice containers is an integer multiple of the reference unit, each slice container includes slice data, the slice data is data obtained after slice processing is performed on the data, and N is an integer greater than or equal to 2; determining, based on the total bandwidth of the N slice containers and an available link resource, M links for carrying the N slice containers, where M is an integer greater than or equal to 1; and adding the N slice containers to the M links, to send the data to a receive end.

In the invention, the total bandwidth of the N slice containers is determined based on the reference unit. For example, the bandwidth of the N slice containers may be an integer multiple of the reference unit. The reference unit may be the minimum bandwidth of the service of transmitting the data. For example, if the minimum bandwidth of the service of the data is 2 Mbps, the reference unit may be 2 Mbps. Therefore, the total bandwidth of the N slice containers may be (2n) Mbps (n is an integer greater than or equal to 1), so that a unit of 1.24416 Gbps may not be used. Because the total bandwidth of the N slice containers may be less than 1.24416 Gbps, the following case is further avoided: A small-bandwidth link is insufficient to carry the N slice containers, causing a waste of the small-bandwidth link. Therefore, the small bandwidth link (which may also be understood as a small-bandwidth fragment) in the optical transport network is effectively used, and utilization of the small-bandwidth link is improved.

With reference to the first aspect, in a possible implementation, each slice container further includes a link identifier, and the link identifier is an identifier of a link for carrying each slice container.

In this embodiment of this application, each slice container includes a link identifier, so that a data transmission apparatus can effectively identify the slice containers carried on the M links.

With reference to either of the first aspect and the foregoing possible implementation of the first aspect, each slice container further includes a sequence identifier, the sequence identifier is obtained by encoding the N slice containers according to a preset rule, and the sequence identifier is used to indicate sorting of the N slice containers.

In this embodiment of this application, each slice container includes a sequence identifier, so that the receive end sorts slice data based on the sequence identifier, to restore data, that is, continuous data sent by the data transmission apparatus, thereby improving data restoration efficiency of the receive end.

With reference to any one of the first aspect and the foregoing possible implementations of the first aspect, the M links include a first link and a second link; and the adding the N slice containers to the M links includes: adding K slice containers in the N slice containers based on a bandwidth ratio of the first link to the second link, where a quantity of slice containers to be carried on the first link and a quantity of slice containers to be carried on the second link are determined based on the bandwidth ratio of the first link to the second link, and K ≤ N.

In this embodiment of this application, the quantity of slice containers to be carried on the first link and the quantity of slice containers to be carried on the second link are determined based on the bandwidth ratio of the first link to the second link, so that bandwidth of the first link and the second link can be fully used, and bandwidth utilization is improved, thereby improving utilization of network bandwidth in the optical transport network.

With reference to any one of the first aspect and the foregoing possible implementations of the first aspect, the adding K slice containers in the N slice containers based on a bandwidth ratio of the first link to the second link includes: sequentially allocating the K slice containers to the first link and the second link based on the bandwidth ratio of the first link to the second link and the sequence identifier included in each slice container, where a slice container to be carried on the first link is at least one first slice container, and a slice container to be carried on the second link is at least one second slice container; and adding the first slice container to the first link, and adding the second slice container to the second link.

With reference to any one of the first aspect and the foregoing possible implementations of the first aspect, the adding K slice containers in the N slice containers based on a bandwidth ratio of the first link to the second link includes: determining, based on the bandwidth ratio of the first link to the second link and N, the quantity of slice containers to be carried on the first link and the quantity of slice containers to be carried on the second link, where the quantity of slice containers to be carried on the first link is a first quantity, and the quantity of slice containers to be carried on the second link is a second quantity; and adding slice containers of the first quantity to the first link, and adding slice containers of the second quantity to the second link.

With reference to any one of the first aspect and the foregoing possible implementations of the first aspect, after the determining, based on the total bandwidth of the N slice containers and an available link resource, M links for carrying the N slice containers, the method further includes:
updating M based on the total bandwidth of the N slice containers and the available link resource, where updated M is equal to M before the update plus A, or updated M is equal to M before the update minus B, A is an integer greater than or equal to 1, and B is an integer greater than or equal to 1.

In this embodiment of this application, in a process of adding the N slice containers to the M links, M may be further updated based on the total bandwidth of the N slice containers and the available link resource. In other words, in the process of adding the N slice containers to the M links, a link may be further added or deleted, so that dynamic bandwidth adjustment can be implemented, thereby improving flexibility of allocating the slice containers.

According to a second aspect according to the invention, the invention further provides a data transmission method. The method is applied to an optical transport network, and the method includes: receiving N slice containers added by a transmit end to M links, where total bandwidth of the N slice containers is an integer multiple of a reference unit, the reference unit is minimum bandwidth of a service of transmitting data, each slice container includes slice data, the slice data is data obtained after slice processing is performed on the data, each slice container further includes a sequence identifier, and N is an integer greater than or equal to 2; and sorting the N slice containers based on the sequence identifier, to obtain the data.

In the invention, the slice container includes a sequence identifier, so that after receiving the N slice containers, a receive end can effectively restore the data, thereby improving data restoration efficiency.

With reference to the second aspect, in a possible implementation, the M links include a first link and a second link, and a quantity of slice containers to be carried on the first link and a quantity of slice containers to be carried on the second link are determined based on a bandwidth ratio of the first link to the second link.

With reference to either of the second aspect and the foregoing possible implementation of the second aspect, each slice container further includes a link identifier, and the link identifier is used to indicate an identifier of a link for carrying each slice container.

According to a third aspect according to the invention, the invention provides a data transmission apparatus, including: a first determining unit, configured to determine total bandwidth of N slice containers based on a reference unit, where the reference unit is minimum bandwidth of a service of transmitting data, the total bandwidth of the N slice containers is an integer multiple of the reference unit, each slice container includes slice data, the slice data is data obtained after slice processing is performed on the data, and N is an integer greater than or equal to 2; and
a second determining unit, configured to determine, based on the total bandwidth of the N slice containers and an available link resource, M links for carrying the N slice containers, where M is an integer greater than or equal to 1; and a sending unit, configured to add the N slice containers to the M links, to send the data to a receive end.

With reference to the third aspect, in a possible implementation, each slice container further includes a link identifier, and the link identifier is an identifier of a link for carrying each slice container.

With reference to either of the third aspect and the foregoing possible implementation of the third aspect, each slice container further includes a sequence identifier, the sequence identifier is obtained by encoding the N slice containers according to a preset rule, and the sequence identifier is used to indicate sorting of the N slice containers.

With reference to any one of the third aspect and the foregoing possible implementations of the third aspect, the M links include a first link and a second link; and when adding the N slice containers to the M links, the sending unit is specifically configured to add K slice containers in the N slice containers based on a bandwidth ratio of the first link to the second link, where a quantity of slice containers to be carried on the first link and a quantity of slice containers to be carried on the second link are determined based on the bandwidth ratio of the first link to the second link, and K ≤ N.

With reference to any one of the third aspect and the foregoing possible implementations of the third aspect, the sending unit is specifically configured to: sequentially allocate the K slice containers to the first link and the second link based on the bandwidth ratio of the first link to the second link and the sequence identifier included in each slice container, where a slice container to be carried on the first link is at least one first slice container, and a slice container to be carried on the second link is at least one second slice container; and add the first slice container to the first link, and add the second slice container to the second link.

With reference to any one of the third aspect and the foregoing possible implementations of the third aspect, the sending unit is specifically configured to: determine, based on the bandwidth ratio of the first link to the second link and N, the quantity of slice containers to be carried on the first link and the quantity of slice containers to be carried on the second link, where the quantity of slice containers to be carried on the first link is a first quantity, and the quantity of slice containers to be carried on the second link is a second quantity; and add slice containers of the first quantity to the first link, and add slice containers of the second quantity to the second link.

With reference to any one of the third aspect and the foregoing possible implementations of the third aspect, the apparatus further includes: a link processing unit, configured to update M based on the total bandwidth of the N slice containers and the available link resource, where updated M is equal to M before the update plus A, or updated M is equal to M before the update minus B, A is an integer greater than or equal to 1, and B is an integer greater than or equal to 1.

It may be understood that the data transmission apparatus in this embodiment of this application may also be understood as a transmit end.

According to a fourth aspect, an embodiment of this application provides a receive end, including: a receiving unit, configured to receive N slice containers added by a transmit end to M links, where total bandwidth of the N slice containers is an integer multiple of a reference unit, the reference unit is minimum bandwidth of a service of transmitting data, each slice container includes slice data, the slice data is data obtained after slice processing is performed on the data, each slice container further includes a sequence identifier, and N is an integer greater than or equal to 2; and a sorting unit, configured to sort the N slice containers based on the sequence identifier, to obtain the data.

With reference to the fourth aspect, in a possible implementation, the M links include a first link and a second link, and a quantity of slice containers to be carried on the first link and a quantity of slice containers to be carried on the second link are determined based on a bandwidth ratio of the first link to the second link.

With reference to either of the fourth aspect and the foregoing possible implementation of the fourth aspect, each slice container further includes a link identifier, and the link identifier is used to indicate an identifier of a link for carrying each slice container.

According to a fifth aspect, an embodiment of this application further provides a data transmission apparatus, including a processor, a memory, and an optical module. The processor is coupled to the memory, the processor is configured to run instructions or programs in the memory, and the processor is configured to: determine total bandwidth of N slice containers based on a reference unit, and determine, based on the total bandwidth of the N slice containers and an available link resource, M links for carrying the N slice containers, where the reference unit is minimum bandwidth of a service of transmitting data, the total bandwidth of the N slice containers is an integer multiple of the reference unit, each slice container includes slice data, the slice data is data obtained after slice processing is performed on the data, N is an integer greater than or equal to 2, and M is an integer greater than or equal to 1. The optical module is coupled to the processor, and the optical module is configured to add the N slice containers to the M links, to send the data to a receive end.

With reference to any one of the fifth aspect and the foregoing possible implementations of the fifth aspect, when adding the N slice containers to the M links, the optical module is specifically configured to add K slice containers in the N slice containers based on a bandwidth ratio of a first link to a second link, where a quantity of slice containers to be carried on the first link and a quantity of slice containers to be carried on the second link are determined based on the bandwidth ratio of the first link to the second link, and K ≤ N.

With reference to either of the fifth aspect and the foregoing possible implementation of the fifth aspect, the optical module is specifically configured to: sequentially allocate the K slice containers to the first link and the second link based on the bandwidth ratio of the first link to the second link and a sequence identifier included in each slice container, where a slice container to be carried on the first link is at least one first slice container, and a slice container to be carried on the second link is at least one second slice container; and add the first slice container to the first link, and add the second slice container to the second link.

With reference to any one of the fifth aspect and the foregoing possible implementations of the fifth aspect, the optical module is specifically configured to: determine, based on the bandwidth ratio of the first link to the second link and N, the quantity of slice containers to be carried on the first link and the quantity of slice containers to be carried on the second link, where the quantity of slice containers to be carried on the first link is a first quantity, and the quantity of slice containers to be carried on the second link is a second quantity; and add slice containers of the first quantity to the first link, and add slice containers of the second quantity to the second link.

With reference to any one of the fifth aspect and the foregoing possible implementations of the fifth aspect, the processor is further configured to update M based on the total bandwidth of the N slice containers and the available link resource, where updated M is equal to M before the update plus A, or updated M is equal to M before the update minus B, A is an integer greater than or equal to 1, and B is an integer greater than or equal to 1.

It may be understood that the data transmission apparatus in this embodiment of this application may also be understood as a transmit end.

According to a sixth aspect according to the present disclosure, the disclosure further provides a receive end, including a processor, a memory, and an optical module. The processor is coupled to the optical module, and the optical module is configured to receive N slice containers added by a transmit end to M links, where total bandwidth of the N slice containers is an integer multiple of a reference unit, the reference unit is minimum bandwidth of a service of transmitting data, each slice container includes slice data, the slice data is data obtained after slice processing is performed on the data, each slice container further includes a sequence identifier, and N is an integer greater than or equal to 2. The processor is coupled to the memory, and the processor is configured to run programs or instructions in the memory, to perform a step of sorting the N slice containers based on the sequence identifier, to obtain the data.

With reference to the sixth aspect, in a possible implementation, the M links include a first link and a second link, and a quantity of slice containers to be carried on the first link and a quantity of slice containers to be carried on the second link are determined based on a bandwidth ratio of the first link to the second link.

With reference to either of the sixth aspect and the foregoing possible implementation of the sixth aspect, each slice container further includes a link identifier, and the link identifier is used to indicate an identifier of a link for carrying each slice container.

According to a seventh aspect according to the invention, the invention provides a data transmission system. The data transmission system includes a transmit end and a receive end, and the transmit end and the receive end are connected through an optical transport network. The transmit end is configured to: determine total bandwidth of N slice containers based on a reference unit, and determine, based on the total bandwidth of the N slice containers and an available link resource, M links for carrying the N slice containers, where M is an integer greater than or equal to 1; and add the N slice containers to the M links, to send data to the receive end, where the reference unit is minimum bandwidth of a service of transmitting the data, the total bandwidth of the N slice containers is an integer multiple of the reference unit, each slice container includes slice data, the slice data is data obtained after slice processing is performed on the data, N is an integer greater than or equal to 2, and M is an integer greater than or equal to 1. The receive end is configured to: receive the N slice containers added by the transmit end to the M links, and sort the N slice containers to obtain the data.

According to an eighth aspect of the disclosure, the disclosure provides a computer-readable storage medium. The computer-readable storage medium stores instructions, and when the instructions run on a computer, the computer performs the methods according to the foregoing aspects.

According to a ninth aspect of the disclosure, the disclosure provides a computer program product including instructions. When the computer program product runs on a computer, the computer performs the methods according to the foregoing aspects.

### BRIEF DESCRIPTION OF DRAWINGS

FIG. 1 is a schematic diagram of a framework of a data transmission system according to an embodiment of this application;
FIG. 2 is a schematic diagram of a framework of another data transmission system according to an embodiment of this application;
FIG. 3 is a schematic structural diagram of a data transmission apparatus according to an embodiment of this application;
FIG. 4 is a schematic flowchart of a data transmission method according to an embodiment of this application;
FIG. 5 is a schematic diagram of a format of a slice container according to an embodiment of this application;
FIG. 6 is a schematic diagram of a slice allocation process according to an embodiment of this application;
FIG. 7 is a schematic diagram of another slice allocation process according to an embodiment of this application;
FIG. 8 is a schematic diagram of still another slice allocation process according to an embodiment of this application;
FIG. 9 is a schematic diagram of still another slice allocation process according to an embodiment of this application;
FIG. 10 is a schematic diagram of a sorting process according to an embodiment of this application;
FIG. 11 is a schematic diagram of a format of a line container according to an embodiment of this application;
FIG. 12 is a schematic structural diagram of a transmit end according to an embodiment of this application;
FIG. 13 is a schematic structural diagram of another transmit end according to an embodiment of this application; and
FIG. 14 is a schematic structural diagram of a receive end according to an embodiment of this application.

### DESCRIPTION OF EMBODIMENTS

The following describes the embodiments of this application with reference to the accompanying drawings in the embodiments of this application.

In the specification, claims, and accompanying drawings of this application, the terms "first", "second", and the like are intended to distinguish between different objects but do not indicate a particular order. In addition, the terms "include", "have", and any other variant thereof are intended to cover a non-exclusive inclusion. For example, a process, a method, a system, a product, or a device that includes a series of steps or units is not limited to the listed steps or units, but optionally further includes an unlisted step or unit, or optionally further includes another inherent step or unit of the process, the method, the product, or the device.

It should be understood that in this application, "at least one (item)" refers to one or more, "a plurality of" refers to two or more, "at least two (items)" refers to two or three or more, "and/or" is used to describe an association relationship between associated objects, and indicates that three relationships may exist. For example, "A and/or B" may represent three cases: Only A exists, only B exists, and both A and B exist, where A and B may be singular or plural. The character "/" usually indicates an "or" relationship between the associated objects. "At least one of the following" or a similar expression thereof indicates any combination of the items, including any combination of one or more of the items. For example, at least one of a, b, or c may indicate a, b, c, "a and b", "a and c", "b and c", or "a, b, and c", where a, b, and c may be singular or plural.

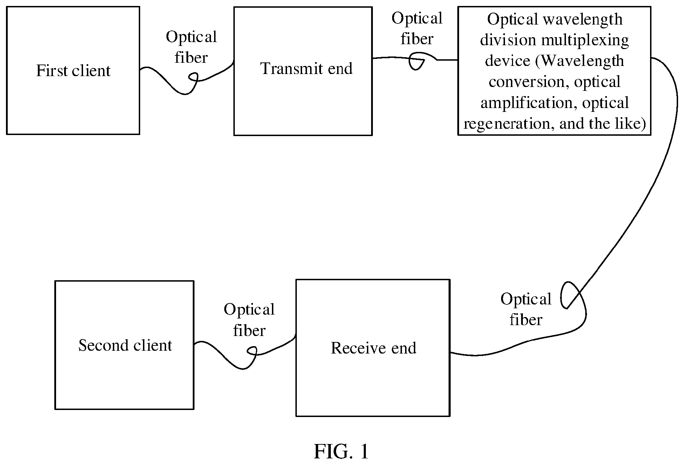

FIG. 1 is a schematic diagram of a framework of a data transmission system according to an embodiment of this application. As shown in FIG. 1, the data transmission system may include a transmit end and a receive end. The transmit end and the receive end may transmit data and the like through an optical transport network. Specifically, the transmit end and the receive end each may be transmission devices. The transmission devices may include devices of such types as an OTN transmission device, a wavelength division multiplexing transmission device, an optical transceiver, an optical modem (modem), an optical fiber transceiver, an optical switch, a plesiochronous digital hierarchy (plesiochronous digital hierarchy, PDH), a synchronous digital hierarchy (SDH), and a packet transport network (PTN).

The transmit end may be configured to: obtain data from a first client, and determine total bandwidth of N slice containers based on a reference unit. The reference unit is minimum bandwidth of a service of transmitting data, the total bandwidth of the N slice containers is an integer multiple of the reference unit, and each slice container includes slice data. After obtaining the N slice containers, the transmit end may send the N slice containers through different links (for example, M links). After receiving the N slice containers, the receive end processes the N slice containers to restore the data, and then sends the data to a second client. The first client may be a client device port connected to a transmission device (for example, the transmit end). For example, the first client may include a router device, a storage device, a video device (including a video collection device), and the like. A specific type of the first client is not limited in this embodiment of this application. The second client may be a client device port connected to a transmission device (for example, the receive end). For example, the second client may include a router device, a storage device, a video device, and the like. A specific type of the second client is not limited in this embodiment of this application.

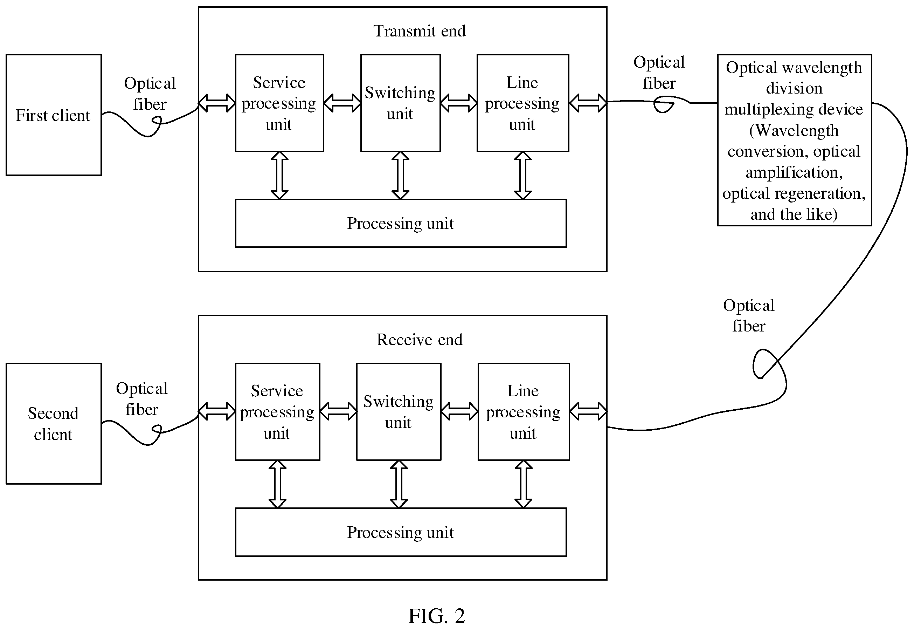

FIG. 2 is a schematic diagram of a framework of another data transmission system according to an embodiment of this application. As shown in FIG. 2, a transmit end may include a service processing unit, a switching unit, a line processing unit, and a processing unit, and a receive end may also include a service processing unit, a switching unit, a line processing unit, and a processing unit.

The service processing unit may be configured to: perform slice processing on data, and generate N slice containers. Each slice container includes slice data. The service processing unit may be further configured to distribute the N slice containers to M links. Specifically, in a process of sending the N slice containers to the receive end through the M links, the N slice containers may sequentially pass through the switching unit and the line processing unit. The switching unit may be configured to perform slice switching, packet switching, or the like on slice data, and the line processing unit may be configured to encapsulate the slice data into a corresponding line container. The processing unit may also be understood as a control unit, and the processing unit may be configured to control the service processing unit to perform data processing and control the switching unit, the line processing unit, and the like.

The transmit end adds the N slice containers to the M links, to send the data to the receive end. After receiving the N slice containers carried by using the M links, the receive end may sort the N slice containers to obtain the data.

In a process in which the receive end receives the N slice containers carried by using the M links, the N slice containers may sequentially pass through the line processing unit, the switching unit, and the service processing unit. The service processing unit may be configured to sort the N slice containers. Specifically, when a slice container is transmitted through different links, because link latencies of different links are usually different, the service processing unit may perform latency alignment on slice containers with different latencies to restore continuous data.

It may be understood that for the transmit end and the receive end, there may be another different form in an actual application. Therefore, specific forms of the transmit end and the receive end are not limited in this embodiment of this application.

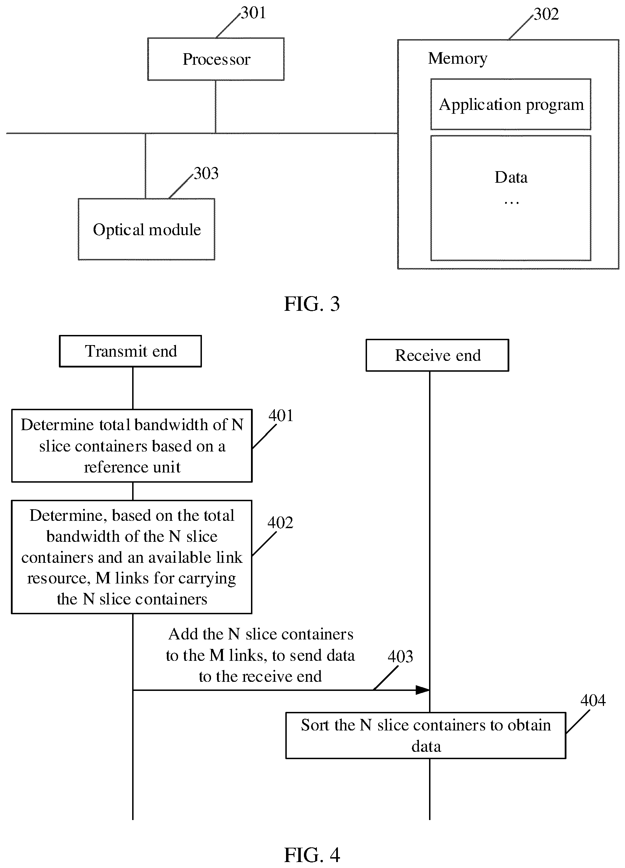

For a more vivid understanding of the transmit end or the receive end provided in the embodiments of this application, FIG. 3 is a schematic structural diagram of a data transmission apparatus according to an embodiment of this application. It may be understood that the data transmission apparatus may be used as a transmit end, or may be used as a receive end. As shown in FIG. 3, the data transmission apparatus includes a processor 301, a memory 302, and an optical module 303. The processor 301, the memory 302, and the optical module 303 are coupled by using a connector, and the connector may include various interfaces, transmission lines, buses, or the like. This is not limited in this embodiment of this application. It should be understood that in each embodiment of this application, couplings mean connections performed in specific manners, including direct connections or indirect connections by using other devices, for example, connections by using various interfaces, transmission lines, and buses.

The memory 302 may be configured to store computer program instructions, including an operating system (OS) and various types of computer program code used to execute the embodiments of this application. Optionally, the memory 302 includes but is not limited to a non-power-off-volatile memory, for example, an embedded multimedia card (EMMC), a universal flash storage (UFS), or a read-only memory (ROM), or another type of static storage device that can store static information and instructions, or may be a power-off volatile memory (volatile memory), for example, a random access memory (RAM), or another type of dynamic storage device that can store information and instructions, or may be an electrically erasable programmable read-only memory (), a compact disc read-only memory (CD-ROM) or another compact disc storage, an optical disc storage (including a compressed optical disc, a laser disc, an optical disc, a digital universal optical disc, a Blu-ray optical disc, and the like), a magnetic disk storage medium or another magnetic storage device, any other computer-readable storage medium capable of carrying or storing program code in a form of instructions or data structures and capable of being accessed by a computer, or the like. The memory 302 is configured to store related instructions and data. The optical module 303 is configured to receive and send data. For example, the optical module may be configured to receive data from a first client, or send data to a second client. This is not limited in this embodiment of this application. It may be understood that the optical module 303 may be further understood as a transceiver interface or the like. Specifically, the optical module 303 may be an optoelectronic component for performing optical-to-electrical and electrical-to-optical conversion, and the optoelectronic component may include two parts: a transmitting part and a receiving part. It may be understood that a specific type or category of the optical module is not limited in this embodiment of this application.

The processor 301 may be one or more central processing units (CPU). When the processor 301 is one CPU, the CPU may be a single-core CPU, or may be a multi-core CPU. Optionally, the processor 301 may be a processor group including a plurality of processors, and the plurality of processors are coupled to each other by using one or more buses. It may be understood that the processor 301 may be another type of processor such as a network processor. Specifically, the processor may be configured to perform the functions performed by the processing unit and the service processing unit shown in FIG. 2.

It may be understood that the data transmission apparatus may further include a controller, a buffer, and the like, and this is not limited in this embodiment of this application. The buffer included in the data transmission apparatus may be configured to buffer data and the like. A specific function of the buffer is not limited in this embodiment of this application.
Specifically, the processor 301 may be configured to process to-be-sent data, and the like, and this is not limited in this embodiment of this application.

It may be understood that the foregoing describes only a schematic structural diagram of one data transmission apparatus provided in the embodiments of this application. In specific implementation, the data transmission apparatus may include more or fewer components than those shown, or may combine two or more components, or may have different configuration implementations of different components, or the like.

FIG. 4 is a schematic flowchart of a data transmission method according to an embodiment of this application. The data transmission method may be applied to the data transmission systems shown in FIG. 1 and FIG. 2. Specifically, the data transmission method may be further applied to the data transmission apparatus shown in FIG. 3. It may be understood that the method shown in FIG. 4 may be applied to an optical transport network. As shown in FIG. 4, the data transmission method includes the following steps.

401. A transmit end determines total bandwidth of N slice containers based on a reference unit.

The reference unit is minimum bandwidth of a service of transmitting data, the total bandwidth of the N slice containers is an integer multiple of the reference unit, each slice container includes slice data, the slice data is data obtained after slice processing is performed on the data, and N is an integer greater than or equal to 2.

In this embodiment of this application, the reference unit may be further understood as minimum bandwidth of a service carried in data transmitted by the transmit end, and the data may be understood as data that is obtained by the transmit end and that needs to be sent to a receive end through the optical transport network. Optionally, the data may be further understood as a service flow or a data flow obtained by the transmit end from a client (for example, a first client). The service flow may include an Ethernet service flow, a synchronous digital hierarchy (SDH) service flow, or the like. A specific type of the data is not limited in this embodiment of this application. Further, for the Ethernet service flow, the reference unit may be 10 Mbps, and for the SDH service flow, the reference unit may be 2 Mbps. Still further, bandwidth of a slice container may be greater than or equal to a reference bandwidth. The reference bandwidth may be understood as client service bandwidth, and more specifically, may be understood as bandwidth of an Ethernet port, bandwidth of a service flow, or the like. The total bandwidth of the N slice containers may be an integer multiple of the reference unit. For example, if the reference unit is 2 Mbps, the total bandwidth of the N slice containers may be n × (2 Mbps), where n is a positive integer. In other words, the total bandwidth of the N slice containers may be further greater than or equal to the reference bandwidth, to ensure effective data transmission, avoid a packet loss of data, and the like. It may be understood that n may be determined based on a system requirement. For example, if the service bandwidth is 115 Mbps, n may be 58.

In this embodiment of this application, the slice container may be understood as a container that can carry slice data (slice). The slice container may also be referred to as a bearer container or the like. A specific name of the slice container is not limited in this embodiment of this application. Specifically, the transmit end may perform slice processing on the data to obtain N pieces of slice data, and then add the N pieces of slice data to the N slice containers respectively. In other words, the transmit end may slice continuous data obtained from the client (for example, the first client) into N pieces of slice data of a fixed length, and then add the N pieces of slice data to the N pieces of slice containers respectively. In other words, one slice container may include one piece of slice data.

Optionally, each slice container may further include a sequence identifier, the sequence identifier is obtained by encoding the N slice containers according to a preset rule, and the sequence identifier is used to indicate sorting of the N slice containers. In other words, the sequence identifier may be used to indicate sorting of the slice data included in the N slice containers. It may be understood that the preset rule may be an encoding rule preset by the transmit end, an encoding rule predefined by the transmit end and the receive end, an encoding rule predefined by another device, or the like. A source of the preset rule is not limited in this embodiment of this application.

It may be understood that a specific value of N is not limited in this embodiment of this application, and N may be any positive integer greater than 2. In specific implementation, N may be determined based on the data and an amount of data that can be carried in each slice container.

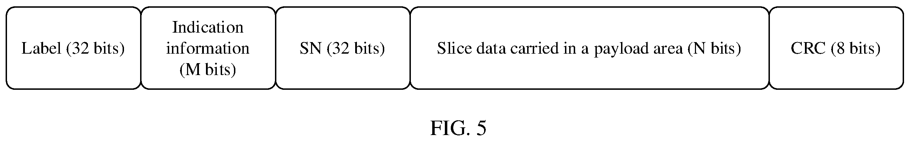

For a more vivid understanding of the slice container, FIG. 5 is a schematic diagram of a format of a slice container according to an embodiment of this application. As shown in FIG. 5, the slice container may not only include (or carry) slice data, but also include (or carry) some information related to the slice data. For example, the slice container may further include a label (label), indication information (PL_info), and a serial number (SN). The label included in the slice container may be used to identify slice data, and is used as an identifier for service switching or service processing. Specifically, the label may be used to indicate different slice data. The indication information may be used to indicate a data amount of slice data included in a payload area (payload area) in the slice container, or the indication information may be used to indicate various types of client associated information. The client associated information may be used to indicate the receive end to restore the slice data. In other words, the related information generated at the transmit end is sent together with the slice data. For example, typical client associated information of the slice data may include clock information and the like of the slice data. The SN may be understood as the sequence identifier in the embodiments of this application. Cyclic redundancy check (CRC) may be used to detect or check an error that may occur after the slice data is transmitted.

It may be understood that a quantity of bytes of each piece of information in the slice container shown in FIG. 5 is merely an example, and should not be construed as a limitation to this embodiment of this application.

For example, the following uses two different types of data as examples to describe how the transmit end performs slice processing on the data.

### Type 1: Ethernet packet data

After obtaining the Ethernet packet data, which may also be referred to as a packet service, the transmit end performs slice processing on the Ethernet packet data to obtain slice data. For example, a frame header and a frame trailer of the slice data may be marked through 65B encoding or 257B encoding; and then encoded slice data is encapsulated into a payload area in a slice container, and indication information is used to mark a quantity of pieces of slice data in the slice container (in other words, indicate a data amount of slice data carried in the slice container). In addition, each time one piece of slice data is generated, an SN may increase by 1 starting from 0, and the SN is reset to 0 after increasing to a maximum value 2^32 - 1.

### Type 2: Fixed-rate code stream data

First, a quantity of bytes of data to be included in each slice container is determined, and then slice processing is performed on the data based on the quantity of bytes, to obtain slice data, so that the slice data is encapsulated into the slice container. In addition, indication information is used to mark a quantity of pieces of slice data in the slice container, phase discrimination is performed on a client service clock, and clock information obtained after the phase discrimination is transmitted by using indication information, where the indication information may be used to restore the clock information. In addition, each time one piece of slice data is generated, an SN may increase by 1 starting from 0, and the SN is reset to 0 after increasing to a maximum value 2^32 - 1.

It may be understood that the foregoing two types of data are merely examples, and should not be construed as a limitation to this embodiment of this application.

402. The transmit end determines, based on the total bandwidth of the N slice containers and an available link resource, M links for carrying the N slice containers, where M is an integer greater than or equal to 1.

In this embodiment of this application, the available link resource may be understood as a currently available link resource. The transmit end may determine, based on the total bandwidth of the N slice containers and the available link resource, the links for carrying the N slice containers. Specifically, the transmit end may determine, based on the total bandwidth of the N slice containers and bandwidth of the currently available link resource such as an available link, the M links for carrying the N slice containers. For example, if the total bandwidth of the N slice containers is 100 Mbps, and the currently available link resource includes a link whose link bandwidth is 100 Mbps, it may be determined that a link used to carry the N slice containers is the link whose link bandwidth is 100 Mbps; or if the currently available link resource includes a link whose link bandwidth is 40 Mbps and a link whose link bandwidth is 60 Mbps, it may be determined that links used to carry the N slice containers are the link whose link bandwidth is 40 Mbps and the link whose link bandwidth is 60 Mbps.

It may be understood that the foregoing example is shown when the link bandwidth is sufficient to carry the N slice containers. However, in some cases, a link bandwidth of a currently available link resource may be insufficient to carry the N slice containers. For example, the bandwidth of the N slice containers is 100 Mbps, but there is only a link whose link bandwidth is 40 Mbps and a link whose link bandwidth is 50 Mbps. In this case, the data transmission method provided in this embodiment of this application may also be applied. In other words, whether the link bandwidth is sufficient to carry the N slice containers does not affect this embodiment of this application, except that in this case, a packet loss may occur in a data transmission process.

403. The transmit end adds the N slice containers to the M links, to send the data to the receive end, and the receive end receives the N slice containers carried by using the M links.

Each slice container further includes a link identifier, and the link identifier is an identifier of a link for carrying each slice container.

In this embodiment of this application, after the M links for carrying the N slice containers are determined, the N slice containers may be separately allocated to the determined links, and then the corresponding slice containers may be carried by using the determined links, to send the data to the receive end. Each slice container may include a link identifier to indicate a link on which the slice container is located. It may be understood that a specific setting of the link identifier is not limited.

For example, determined links include a link A, a link B, and a link C, and there are 100 slice containers (N is 100) whose sequence identifiers are sequentially SN0, SN1, ..., and SN99. For example, the 100 slice containers may be sequentially allocated to the link A, the link B, and the link C in a sequence of SN0, SN1, ..., and SN99, in other words, SN0 is allocated to the link A (an identifier of the link A is carried), SN1 is allocated to the link B (an identifier of the link B is carried), SN2 is allocated to the link C (an identifier of the link C is carried), and the like.

Further, in this embodiment of this application, after determining the M links based on the total bandwidth of the N slice containers and the available link resource, the transmit end may add the N slice containers to the M links. Detailed descriptions of how the transmit end adds the N slice containers to the M links are shown below.

For example, if the M links include a first link and a second link, the adding the N slice containers to the M links includes:
adding K slice containers in the N slice containers based on a bandwidth ratio of the first link to the second link, where a quantity of slice containers to be carried on the first link and a quantity of slice containers to be carried on the second link are determined based on the bandwidth ratio of the first link to the second link, and K ≤ N.

In this embodiment, if the M links are the first link and the second link, the N slice containers may be carried based on the bandwidth ratio of the first link to the second link. In this embodiment, the quantity of slice containers to be carried on the first link and the quantity of slice containers to be carried on the second link may be determined based on the bandwidth ratio of the first link to the second link. For example, if the bandwidth ratio of the first link to the second link is 2:1, when N is a multiple of 3, for example, when N = 3k (k is an integer greater than or equal to 1), the first link may carry 2k slice containers, and the second link may carry k slice containers. When N is not a multiple of 3, for example, when N = 3k + 1, the first link may carry 2k slice containers, the second link may carry k slice containers, and the remaining (3k+1)^{th} slice container may be allocated to the first link. Optionally, the receive end may further continue to obtain data, and then continue to allocate a slice container based on the bandwidth ratio of the first link to the second link. Alternatively, the first link may carry 2k slice containers, and the second link may carry k + 1 slice containers. In other words, a total quantity X of slice containers to be carried on the first link and the second link may be determined based on the bandwidth ratio, and a link on which remaining (N - X) slice containers are to be specifically carried is not limited in this embodiment. If the transmit end further continues to send data to the receive end, the remaining (N - K) slice containers may be further allocated based on an allocation sequence of the X slice containers. If the transmit end does not send data to the receive end any more, the remaining (N - X) slice containers may be carried on the first link or may be carried on the second link. It may be understood that X is related to the bandwidth ratio.

Through implementation of this embodiment, when the determined links include two links, for example, the first link and the second link, a ratio of the quantity of slice containers to be carried on the first link to the quantity of slice containers to be carried on the second link is determined based on the bandwidth ratio of the first link to the second link. Therefore, when bandwidth of one link is insufficient to carry the N slice containers, the N slice containers may be carried by using two links, so that a resource waste of a small-bandwidth fragment is avoided, utilization of the small-bandwidth fragment is improved, and utilization of network bandwidth in the optical transport network is improved.

This embodiment is described by using an example in which the determined links for carrying the N slice containers include two links. However, in specific implementation, the links for carrying the N slice containers may alternatively include three links, more than three links, or the like. Therefore, when the M links include the first link and the second link, the transmit end may add the K slice containers in the N slice containers based on the bandwidth ratio of the first link to the second link. A value of K may be determined based on a bandwidth ratio of all links included in the M links to the first link and the second link. For example, if the M links are a first link, a second link, and a third link, and a bandwidth ratio of the first link, the second link, and the third link is A:B:C, the value of K may be determined based on A + B/(A + B + C). For a specific method, refer to the foregoing implementation. Details are not described herein again.

Further, some embodiments of this application further provide a method for allocating the N slice containers, as shown below:
The adding K slice containers in the N slice containers based on a bandwidth ratio of the first link to the second link includes:
sequentially allocating the K slice containers to the first link and the second link based on the bandwidth ratio of the first link to the second link and the sequence identifier included in each slice container, where a slice container to be carried on the first link is at least one first slice container, and a slice container to be carried on the second link is at least one second slice container; and
adding the first slice container to the first link, and adding the second slice container to the second link.

In this embodiment, after determining the bandwidth ratio of the first link to the second link, the transmit end may allocate the K slice containers to the first link and the second link, and then add the K slice containers to the first link and the second link, to send data to the receive end. When the transmit end separately allocates the K slice containers to the first link and the second link, the slice container to be carried on the first link may be referred to as at least one first slice container, and the slice container to be carried on the second link may be referred to as at least one second slice container. In other words, the slice container allocated to the first link is referred to as the first slice container, and the slice container allocated to the second link is referred to as the second slice container. Therefore, the transmit end may add the first slice container to the first link, and add the second slice container to the second link.

It may be understood that the first slice container and the second slice container shown above are distinguished based on a difference between links on which the slice containers are to be located. The first slice container may include one or more slice containers, and the second slice container may also include one or more slice containers. A quantity of slice containers specifically included in the first slice container and a quantity of slice containers specifically included in the second slice container may depend on an actual case, and are not limited in this embodiment.

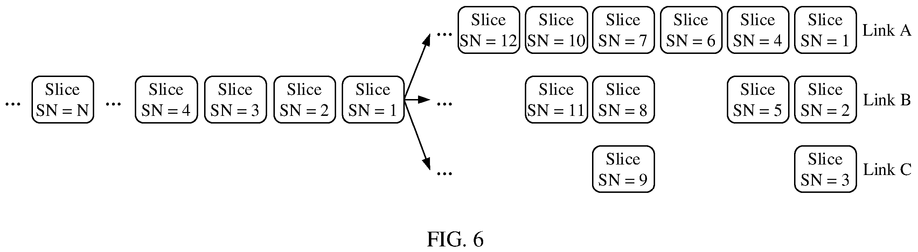

For example, FIG. 6 is a schematic diagram of a slice allocation process according to an embodiment of this application. As shown in FIG. 6, this embodiment uses, for description, an example in which there are three links such as a link A, a link B, and a link C, a bandwidth ratio is 3:2:1, and sequence identifiers included in slice containers are SN1, SN2, ..., and SNN. As shown in FIG. 6, the transmit end may separately allocate adjacent slice containers to different links. For example, a slice container whose SN is 1 is allocated to the link A, a slice container whose SN is 2 is allocated to the link B, and a slice container whose SN is 3 is allocated to the link C. Because the bandwidth ratio of the three links is 3:2:1, a slice container whose SN is 4 is allocated to the link A, a slice container whose SN is 5 is allocated to the link B, a slice container whose SN is 6 is allocated to the link A, and the like.

The slice container whose SN is 1, the slice container whose SN is 4, and the slice container whose SN is 6 may be referred to as a first slice container, the slice container whose SN is 2 and the slice container whose SN is 5 may be referred to as a second slice container, and the slice container whose SN is 6 is referred to as a third slice container. It may be understood that the slice containers included in the first slice container are merely examples, and therefore should not be construed as a limitation to this embodiment.

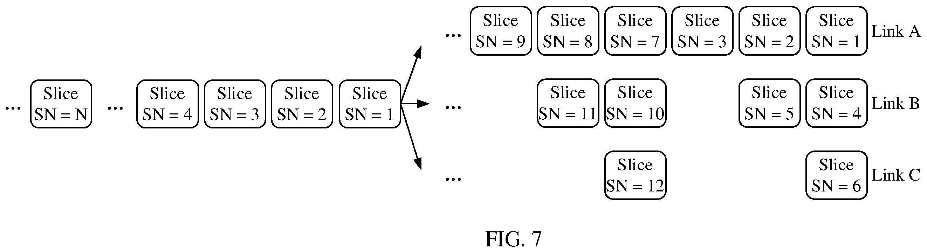

FIG. 7 is a schematic diagram of another slice allocation process according to an embodiment of this application. As shown in FIG. 7, the transmit end may allocate some adjacent slice containers to different links based on a bandwidth ratio. For example, the transmit end may allocate a slice container whose SN is 1, a slice container whose SN is 2, and a slice container whose SN is 3 to a link A, allocate a slice container whose SN is 4 and a slice container whose SN is 5 to a link B, allocate a slice container whose SN is 6 to a link C, and the like.

It may be understood that some embodiments of this application further provide a method for allocating the N slice containers, as shown below:
The adding K slice containers in the N slice containers based on a bandwidth ratio of the first link to the second link includes:
determining, based on the bandwidth ratio of the first link to the second link and N, the quantity of slice containers to be carried on the first link and the quantity of slice containers to be carried on the second link, where the quantity of slice containers to be carried on the first link is a first quantity, and the quantity of slice containers to be carried on the second link is a second quantity; and
adding slice containers of the first quantity to the first link, and adding slice containers of the second quantity to the second link.

In this embodiment, the transmit end may determine, based on the bandwidth ratio of the first link to the second link and the total quantity N of slice containers, the quantity of slice containers that can be allocated to the first link and the quantity of slice containers that can be allocated to the second link. For example, if the bandwidth ratio of the first link to the second link is 1:2, and the total quantity of slice containers is 3N, the quantity of slice containers to be carried on the first link is N, and the quantity of slice containers to be carried on the second link is 2N. Optionally, if the quantity of slice containers is 3N + 1, the first quantity may be N + 1, or the second quantity is 2N + 1. Specifically, after determining the first quantity and the second quantity, the transmit end may separately allocate the N slice containers to the first link and the second link based on a quantity ratio of the first quantity to the second quantity, or may directly separately allocate the slice containers of the first quantity and the slice containers of the second quantity to the first link and the second link.

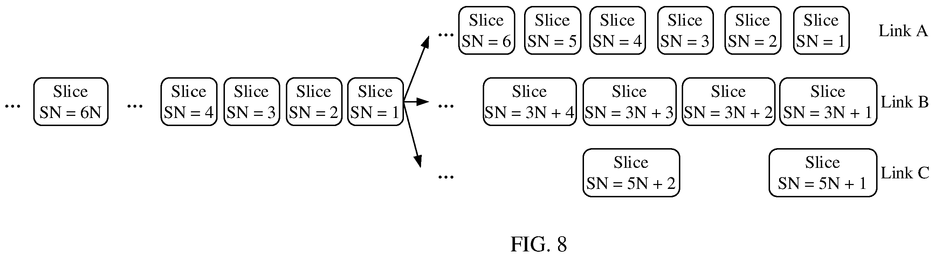

For example, FIG. 8 is a schematic diagram of still another slice allocation process according to an embodiment of this application. Descriptions are provided by using an example in which there are three links such as a link A, a link B, and a link C, a bandwidth ratio is 3:2:1, and sequence identifiers carried in slice containers are SN1, SN2, ..., and SN6N. Because the bandwidth ratio of the three links is 3:2:1, a quantity of slice containers to be carried on the link A is 3N, a quantity of slice containers to be carried on the link B is 2N, and a quantity of slice containers to be carried on the link C is N. In this case, slice containers whose sequence identifiers are SN1 to SN3N may be sent through the link A, slice containers whose sequence identifiers are SN3N + 1 to SN5N may be sent through the link B, and slice containers whose sequence identifiers are SN5N + 1 to SN6N may be sent through the link C.

It may be understood that the quantity 3N may be understood as a first quantity, 2N may be understood as a second quantity, and N may be understood as a third quantity, or a first quantity is N, a second quantity is 2N, and a third quantity is 3N, or the like. A specific sequence is not limited in this embodiment. It may be understood that the foregoing shown slice containers to be carried on each link are merely examples, and should not be construed as a limitation to this embodiment. For example, slice containers whose sequence identifiers are SN1 to SNN may be sent through the link C, and slice containers whose sequence identifiers are SN3N + 1 to SN6N may be sent through the link A.

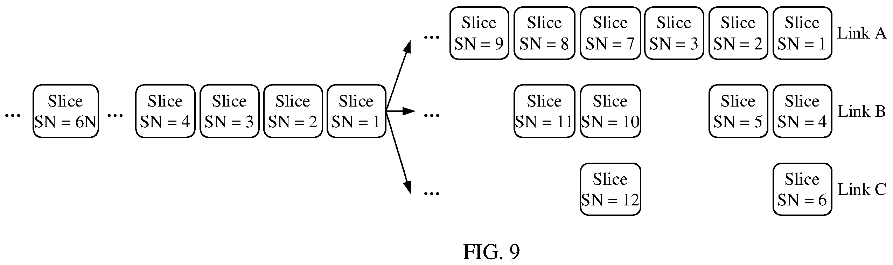

For another example, FIG. 9 is a schematic diagram of still another slice allocation process according to an embodiment of this application. Slice containers on different links may be determined based on a ratio of a first quantity, a second quantity, and a third quantity. For example, if the first quantity is 3N, the second quantity is 2N, and the third quantity is N, based on a ratio of 3:2:1, slice containers whose sequence identifiers are SN1 to SN3 may be sent through a link A, slice containers whose sequence identifiers are SN4 and SN5 may be sent through a link B, a slice container whose sequence identifier is SN6 may be sent through a link C, and the like.

It may be understood that in a process in which the transmit end transmits data, a link may be deleted or added. In this case, descriptions are shown below:
After the determining, based on the total bandwidth of the N slice containers and an available link resource, M links for carrying the N slice containers, the method further includes:
updating M based on the total bandwidth of the N slice containers and the available link resource, where updated M is equal to M before the update plus A, or updated M is equal to M before the update minus B, A is an integer greater than or equal to 1, and B is an integer greater than or equal to 1.

In other words, in this embodiment, the transmit end may further update M based on the available link resource, for example, increase the M links to M + A links, where A is an integer greater than or equal to 1; or decrease the M links to M - B links, where B is an integer greater than or equal to 1.

In this embodiment, a case in which links are increased or decreased may mean that the available link resource changes, and therefore the links to which the transmit end adds the N slice containers need to be increased or decreased, for example, may mean that at least one of the M links is occupied by another device or apparatus or may occur for another reason. A reason for increasing or decreasing the links is not limited in this embodiment.

For example, if the transmit end has added N1 slice containers in the N slice containers to the M links, because the available link resource changes, the links need to be increased or decreased, and in this case, M may be updated based on the total bandwidth of the N slice containers and the available link resource, so that updated M links carry N2 slice containers in the N slice containers. N1 + N2 = N.

Adding a link is used as an example. For example, a link A is added on a basis of a link B and a link C. The transmit end has sent N1 slice containers through the link B and the link C. For example, when the link A needs to be added, the transmit end may separately allocate untransmitted (N - N1), that is, N2, slice containers to the link A, the link B, and the link C based on a bandwidth ratio of the link A, the link B, and the link C. Then the transmit end sends the (N - N1) slice containers to the data receive end through the link A, the link B, and the link C. It may be understood that for an implementation of how the transmit end allocates the (N - N1) slice containers to the link A, the link B, and the link C, reference may be made to descriptions in another embodiment, and details are not described herein again. In specific implementation, a link A may be added on a basis of a link B, and the like, and details are not described herein.

Deleting a link is used as an example. For example, a link A is deleted on a basis of the link A, a link B, and a link C. The transmit end has sent N1 slice containers through the link A, the link B, and the link C. For example, when the link A needs to be deleted, the transmit end may consider bandwidth of the link A as 0, and then allocate (N - N1), that is, N2, slice containers to the link B and the link C, so that the transmit end does not allocate a slice container to the link A any more. After a period of time (greater than a link latency), after a slice container that has been allocated to the link A is sent to the receive end, in other words, when the receive end has received the slice container carried on the link A, the link A may be deleted. It may be understood that for an implementation of how the transmit end allocates the (N - N1) slice containers to the link B and the link C, reference may be made to descriptions in another embodiment, and details are not described herein again. In specific implementation, a link A may be deleted on a basis of the link A and a link B, and the like, and details are not described herein.

In this embodiment, the transmit end can not only flexibly delete a link, but also flexibly add a link, so that link allocation or adjustment can be performed more flexibly, thereby improving link utilization.

404. The receive end sorts the N slice containers to obtain the data.

Specifically, the receive end may sort the N slice containers by using sequence identifiers included in the slice containers, to obtain the data sent by the transmit end.

In this embodiment of this application, in a process in which the receive end receives the N slice containers, the receive end may sort the N slice containers based on the sequence identifiers. In other words, the receive end may sort the N slice containers to obtain sorting of the N pieces of slice data, to restore the data sent by the transmit end, that is, restore the continuous data.

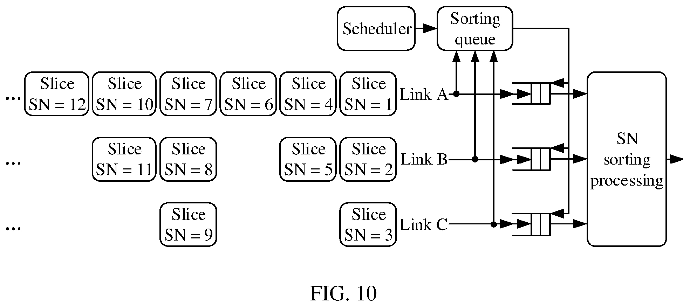

A method, shown in FIG. 6, for sending the N slice containers by the data transmit end is used as an example. FIG. 10 is a schematic diagram of a sorting process according to an embodiment of this application. As shown in FIG. 10, in a process in which the receive end performs sorting, there are the following rules:
a. Because SN numbers of slice containers carried on each link are in order, in other words, the SNs of the slice containers carried on each link are sorted in ascending order, after a scheduler schedules a slice container from a sorting queue, sorting processing is performed on a slice container output by each sorting queue. Sorting is performed according to the following processing rule: A slice container with a small SN is first output, and SNs of output slice containers need to be consecutive.
b. Provided that a sorting queue is not empty, the scheduler schedules and outputs a slice container, and after the slice container is sorted and output, the scheduler schedules a new slice container for sorting. The scheduler finds a current minimum SN from SNs output by all the queues, and determines whether the current SN and an SN output last time are consecutive. If the current SN and the SN output last time are consecutive, the scheduler outputs the current minimum SN, schedules a new SN in a corresponding queue, and finds a current minimum SN again. If the current SN and the SN output last time are inconsecutive, the scheduler waits for an SN adjacent to the previous SN to arrive. If an SN is lost, the scheduler outputs the current minimum SN through aging or when another SN is output in the sorting queue. The aging may mean that the scheduler does not wait any longer when a waiting time reaches a time threshold or another condition capable of determining the loss is reached.

It may be understood that although a slice container may be lost in a data transmission process, a process of sorting slice containers by the receive end is not affected.

In this embodiment of this application, the total bandwidth of the N slice containers is determined based on the reference unit. For example, the bandwidth of the N slice containers may be an integer multiple of the reference unit. The reference unit may be the minimum bandwidth of the service of transmitting the data. For example, if the minimum bandwidth of the service of the data is 2 Mbps, the reference unit may be 2 Mbps. Therefore, the total bandwidth of the N slice containers may be (2n) Mbps (n is an integer greater than or equal to 1), so that a unit of 1.24416 Gbps may not be used. Because the total bandwidth of the N slice containers may be less than 1.24416 Gbps, the following case is further avoided: A small-bandwidth link is insufficient to carry the N slice containers, causing a waste of the small-bandwidth link. Therefore, the small-bandwidth link (which may also be understood as a small-bandwidth fragment) in the optical transport network is effectively used, and utilization of the small-bandwidth link is improved.

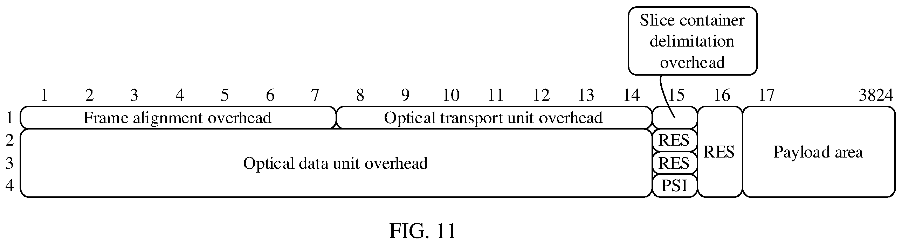

Further, the method shown in FIG. 4 may be separately implemented by using the transmit end and the receive end shown in FIG. 1. In a process in which the transmit end separately adds the N slice containers to, for example, a link A, a link B, and a link C, and sends the N slice containers to the receive end, service switching may be further performed by using the switching unit shown in FIG. 2, for example, slice switching may be performed on the N slice containers by using the switching unit, for example, a switching header is added, to indicate a destination of each slice container (for example, indicate an identifier of the receive end). For another example, packet switching may be performed on the N slice containers by using the switching unit, for example, packet encapsulation is performed and a destination identifier is added. The line processing unit shown in FIG. 2 may be configured to encapsulate a slice container into an OTN line container. The line container is a shared container, and all slice containers may use the shared container. The shared container may allocate maximum bandwidth to each service, to ensure that bandwidth of the slice container does not exceed the specified maximum bandwidth. In this way, transmission bandwidth of each service can be ensured. For example, FIG. 11 is a schematic diagram of a format of a line container according to an embodiment of this application. As shown in FIG. 11, the line container may include a frame alignment overhead (framer alignment overhead), an optical transport unit overhead (OTU overhead), an optical data unit overhead (ODU overhead), a slice container delimitation overhead (cell align), a payload signal indication (PSI), and a payload area (payload area). The line container further includes a reserved area (RES). Each slice container is encapsulated into an OPU frame (an OTN line container) through rate adaptation as a whole. When bandwidth of the slice container is insufficient, IDLE data is filled into the OPU frame. Delimitation of the slice container in the OPU frame may be indicated by an OPU overhead. The OPU overhead may further indicate a ranking of a byte of the slice container that is the first byte of an OPU payload area. It may be understood that the foregoing is merely one line container provided in the embodiments of this application, and in specific implementation, another category of line container may be further included. Details are not described herein.

Further, the method performed by the transmit end in the method shown in FIG. 4 may be further implemented by using the service processing unit and the processing unit in the transmit end shown in FIG. 2, and the method performed by the receive end in the method shown in FIG. 4 may be further implemented by using the service processing unit and the processing unit in the receive end shown in FIG. 3. For a specific implementation, refer to descriptions in the foregoing embodiments. Details are not described herein again.

The method in the embodiments of this application is described above in detail, and the following provides apparatuses in the embodiments of this application.

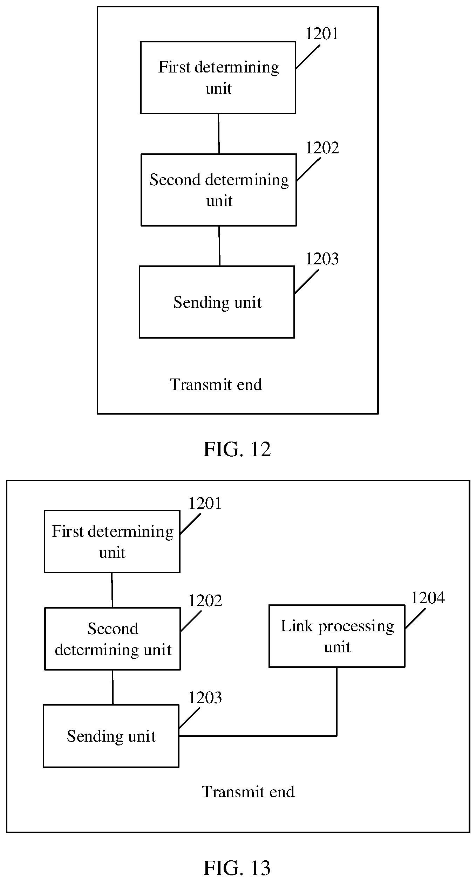

FIG. 12 is a schematic structural diagram of a transmit end according to an embodiment of this application. The transmit end may be configured to perform the method shown in FIG. 4. As shown in the figure, the transmit end includes:
a first determining unit 1201, configured to determine total bandwidth of N slice containers based on a reference unit, where the reference unit is minimum bandwidth of a service of transmitting data, the total bandwidth of the N slice containers is an integer multiple of the reference unit, each slice container includes slice data, the slice data is data obtained after slice processing is performed on the data, and N is an integer greater than or equal to 2;
a second determining unit 1202, configured to determine, based on the total bandwidth of the N slice containers and an available link resource, M links for carrying the N slice containers, where M is an integer greater than or equal to 1; and
a sending unit 1203, configured to add the N slice containers to the M links, to send the data to a receive end.

In a possible implementation, each slice container further includes a link identifier, and the link identifier is an identifier of a link for carrying each slice container.

In a possible implementation, each slice container further includes a sequence identifier, the sequence identifier is obtained by encoding the N slice containers according to a preset rule, and the sequence identifier is used to indicate sorting of the N slice containers.

In a possible implementation, the M links include a first link and a second link; and
when adding the N slice containers to the M links, the sending unit 1203 is specifically configured to add K slice containers in the N slice containers based on a bandwidth ratio of the first link to the second link, where a quantity of slice containers to be carried on the first link and a quantity of slice containers to be carried on the second link are determined based on the bandwidth ratio of the first link to the second link, and K ≤ N.

In a possible implementation, the sending unit 1203 is specifically configured to: sequentially allocate the K slice containers to the first link and the second link based on the bandwidth ratio of the first link to the second link and the sequence identifier included in each slice container, where a slice container to be carried on the first link is at least one first slice container, and a slice container to be carried on the second link is at least one second slice container; and add the first slice container to the first link, and add the second slice container to the second link.

In a possible implementation, the sending unit 1203 is specifically configured to: determine, based on the bandwidth ratio of the first link to the second link and N, the quantity of slice containers to be carried on the first link and the quantity of slice containers to be carried on the second link, where the quantity of slice containers to be carried on the first link is a first quantity, and the quantity of slice containers to be carried on the second link is a second quantity; and add slice containers of the first quantity to the first link, and add slice containers of the second quantity to the second link.

In a possible implementation, the apparatus further includes:
a link processing unit 1204, configured to update M based on the total bandwidth of the N slice containers and the available link resource, where updated M is equal to M before the update plus A, or updated M is equal to M before the update minus B, A is an integer greater than or equal to 1, and B is an integer greater than or equal to 1.

For implementation of each unit, correspondingly refer to the corresponding description in the method embodiment shown in FIG. 4.

It may be understood that the processor shown in FIG. 3 may be configured to perform the shown functions of the first determining unit 1201 and the second determining unit 1202, and the optical module shown in FIG. 3 may be configured to perform the shown functions of the sending unit 1203. It may be understood that in some implementations, the processor shown in FIG. 3 may further control the optical module to perform the shown functions of the sending unit 1203, for example, the processor may control the optical module to allocate a slice container. This is not limited in this embodiment of this application.

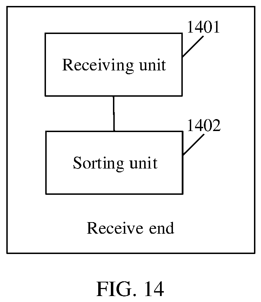

FIG. 14 is a schematic structural diagram of a receive end according to an embodiment of this application. The receive end may be configured to perform the method shown in FIG. 4. As shown in the figure, the receive end includes:
a receiving unit 1401, configured to receive N slice containers added by a transmit end to M links, where total bandwidth of the N slice containers is an integer multiple of a reference unit, the reference unit is minimum bandwidth of a service of transmitting data, each slice container includes slice data, the slice data is data obtained after slice processing is performed on the data, each slice container further includes a sequence identifier, and N is an integer greater than or equal to 2; and
a sorting unit 1402, configured to sort the N slice containers based on the sequence identifier, to obtain the data.

In a possible implementation, the M links include a first link and a second link, and a quantity of slice containers to be carried on the first link and a quantity of slice containers to be carried on the second link are determined based on a bandwidth ratio of the first link to the second link.

In a possible implementation, each slice container further includes a link identifier, and the link identifier is used to indicate an identifier of a link for carrying each slice container.

For implementation of each unit, correspondingly refer to the corresponding description in the method embodiment shown in FIG. 4.

It may be understood that the processor shown in FIG. 3 may be further configured to perform the functions performed by the sorting unit 1402, and the optical module may be configured to perform the functions performed by the receiving unit 1401.

All or some of the foregoing embodiments may be implemented by using software, hardware, firmware, or any combination thereof. When software is used to implement the embodiments, all or some of the embodiments may be implemented in a form of a computer program product. The computer program product includes one or more computer instructions. When the computer program instructions are loaded and executed on a computer, all or some of the procedures or functions according to the embodiments of this application are performed. The computer may be a general-purpose computer, a dedicated computer, a computer network, or another programmable apparatus. The computer instructions may be stored in a computer-readable storage medium, or may be transmitted through the computer-readable storage medium. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), a semiconductor medium (for example, a solid-state drive (SSD)), or the like.

A sequence of the steps of the method in the embodiments of this application may be adjusted, or the steps may be combined or removed based on an actual requirement.

The modules in the apparatus in the embodiments of this application may be combined, divided, and deleted based on an actual requirement.

In conclusion, the foregoing embodiments are merely intended for describing the technical solutions of this application, but not for limiting this application. Although this application is described in detail with reference to the foregoing embodiments, persons of ordinary skill in the art should understand that they may still make modifications to the technical solutions described in the foregoing embodiments or make equivalent replacements to some technical features thereof, without departing from the scope of the technical solutions of the embodiments of this application.

## Claims

1. A data transmission method, wherein the method is applied to an optical transport network, and the method comprises:
determining (401) total bandwidth ofN slice containers based on a reference unit, wherein the reference unit is minimum bandwidth of a service of transmitting data, the total bandwidth of the N slice containers is an integer multiple of the reference unit, each slice container comprises slice data, the slice data is data obtained after slice processing is performed on the data, and N is an integer greater than or equal to 2;
determining (402), based on the total bandwidth of the N slice containers and an available link resource, M links for carrying the N slice containers, wherein M is an integer greater than or equal to 1; and
adding (403) the N slice containers to the M links, and
sending the data to a receive end (1401, 1402) through the different links, **characterised in that**, each slice container further comprises a sequence identifier, the sequence identifier is obtained by encoding the N slice containers according to a preset rule, and the sequence identifier is used to indicate sorting (404) of the N slice containers;
wherein the M links comprise a first link and a second link; and
the adding the N slice containers to the M links comprises:
adding K slice containers in the N slice containers based on a bandwidth ratio of the first link to the second link, wherein a quantity of slice containers to be carried on the first link and a quantity of slice containers to be carried on the second link are determined based on the bandwidth ratio of the first link to the second link, and K ≤ N.

2. The method according to claim 1, wherein each slice container further comprises a link identifier, and the link identifier is an identifier of a link for carrying each slice container.

3. The method according to claim 1, wherein
the adding K slice containers in the N slice containers based on a bandwidth ratio of the first link to the second link comprises:
sequentially allocating the K slice containers to the first link and the second link based on the bandwidth ratio of the first link to the second link and the sequence identifier comprised in each slice container, wherein a slice container to be carried on the first link is at least one first slice container, and a slice container to be carried on the second link is at least one second slice container; and
adding the first slice container to the first link, and adding the second slice container to the second link.

4. The method according to claim 1, wherein the adding K slice containers in the N slice containers based on a bandwidth ratio of the first link to the second link comprises:
determining, based on the bandwidth ratio of the first link to the second link and N, the quantity of slice containers to be carried on the first link and the quantity of slice containers to be carried on the second link, wherein the quantity of slice containers to be carried on the first link is a first quantity, and the quantity of slice containers to be carried on the second link is a second quantity; and
adding slice containers of the first quantity to the first link, and adding slice containers of the second quantity to the second link.

5. The method according to any one of claims 1 to 4, wherein after the determining, based on the total bandwidth of the N slice containers and an available link resource, M links for carrying the N slice containers, the method further comprises:
updating M based on the total bandwidth of the N slice containers and the available link resource, wherein updated M is equal to M before the update plus A, or updated M is equal to M before the update minus B, A is an integer greater than or equal to 1, and B is an integer greater than or equal to 1.

6. A data transmission apparatus, comprising:
a first determining unit (1201), configured to determine (401) total bandwidth of N slice containers based on a reference unit, wherein the reference unit is minimum bandwidth of a service of transmitting data, the total bandwidth of the N slice containers is an integer multiple of the reference unit, each slice container comprises slice data, the slice data is data obtained after slice processing is performed on the data, and N is an integer greater than or equal to 2;
a second determining unit (1202), configured to determine (402), based on the total bandwidth of the N slice containers and an available link resource, M links for carrying the N slice containers, wherein M is an integer greater than or equal to 1; and
a sending unit (1203), configured to add (403) the N slice containers to the M links, and send the data to a receive end (1401, 1402) through the different links;
**characterised in that**
each slice container further comprises a sequence identifier, the sequence identifier is obtained by encoding the N slice containers according to a preset rule, and the sequence identifier is used to indicate sorting (404) of the N slice containers;
wherein the M links comprise a first link and a second link; and
when adding the N slice containers to the M links, the sending unit is specifically configured to add K slice containers in the N slice containers based on a bandwidth ratio of the first link to the second link, wherein a quantity of slice containers to be carried on the first link and a quantity of slice containers to be carried on the second link are determined based on the bandwidth ratio of the first link to the second link, and K ≤ N.

7. The apparatus according to claim 6, wherein each slice container further comprises a link identifier, and the link identifier is an identifier of a link for carrying each slice container.

8. The apparatus according to claim 6, wherein
the sending unit is specifically configured to: sequentially allocate the K slice containers to the first link and the second link based on the bandwidth ratio of the first link to the second link and the sequence identifier comprised in each slice container, wherein a slice container to be carried on the first link is at least one first slice container, and a slice container to be carried on the second link is at least one second slice container; and add the first slice container to the first link, and add the second slice container to the second link.

9. The apparatus according to claim 5, wherein
the sending unit is specifically configured to: determine, based on the bandwidth ratio of the first link to the second link and N, the quantity of slice containers to be carried on the first link and the quantity of slice containers to be carried on the second link, wherein the quantity of slice containers to be carried on the first link is a first quantity, and the quantity of slice containers to be carried on the second link is a second quantity; and add slice containers of the first quantity to the first link, and add slice containers of the second quantity to the second link.

10. The apparatus according to claim 6, wherein the apparatus is a data transmission apparatus, comprising a processor (301), a memory (302), and an optical module (303), wherein the optical module (303) is coupled to the processor (301), and the optical module (303) constitutes the sending unit.

11. A data transmission system, wherein the data transmission system comprises a transmit end (1201, 1202, 1203, 1204) and a receive end (1401, 1402), wherein
the transmit end is the data transmission apparatus according to claims 6-10; and
the receive end is configured to: receive (403) the N slice containers added by the transmit end to the M links, and sort (404) the N slice containers to obtain the data.

## Patentansprüche

1. Datenübertragungsverfahren, wobei das Verfahren auf ein optisches Transportnetz angewandt wird und das Verfahren Folgendes umfasst:
Bestimmen (401) einer Gesamtbandbreite von N Scheibenbehältern basierend auf einer Referenzeinheit, wobei die Referenzeinheit eine Mindestbandbreite eines Dienstes zum Übertragen von Daten ist, die Gesamtbandbreite der N Scheibenbehälter ein ganzzahliges Vielfaches der Referenzeinheit ist, jeder Scheibenbehälter Scheibendaten umfasst, die Scheibendaten Daten sind, die erlangt werden, nachdem eine Scheibenverarbeitung an den Daten durchgeführt wird, und N eine Ganzzahl größer als oder gleich 2 ist;
Bestimmen (402), basierend auf der Gesamtbandbreite der N Scheibenbehälter und einer verfügbaren Verknüpfungsressource, von M Verknüpfungen zum Tragen der N Scheibenbehälter, wobei M eine Ganzzahl größer als oder gleich 1 ist; und
Hinzufügen (403) der N Scheibenbehälter zu den M Verknüpfungen und
Senden der Daten an ein Empfangsende (1401, 1402) über die unterschiedlichen Verknüpfungen, **dadurch gekennzeichnet, dass** jeder Scheibenbehälter ferner eine Sequenzkennung umfasst, die Sequenzkennung durch Codieren der N Scheibenbehälter gemäß einer voreingestellten Regel erlangt wird und die Sequenzkennung dazu verwendet wird, eine Sortierung (404) der N Scheibenbehälter anzugeben;
wobei die M Verknüpfungen eine erste Verknüpfung und eine zweite Verknüpfung umfassen; und
das Hinzufügen der N Scheibenbehälter zu den M Verknüpfungen Folgendes umfasst:
Hinzufügen von K Scheibenbehältern in den N Scheibenbehältern basierend auf einem Bandbreitenverhältnis der ersten Verknüpfung zu der zweiten Verknüpfung, wobei eine Anzahl an Scheibenbehältern, die auf der ersten Verknüpfung zu tragen ist, und eine Anzahl an Scheibenbehältern, die auf der zweiten Verknüpfung zu tragen ist, basierend auf dem Bandbreitenverhältnis der ersten Verknüpfung zu der zweiten Verknüpfung bestimmt werden und K ≤ N.

2. Verfahren nach Anspruch 1, wobei jeder Scheibenbehälter ferner eine Verknüpfungskennung umfasst und die Verknüpfungskennung eine Kennung einer Verknüpfung zum Tragen jedes Scheibenbehälters ist.

3. Verfahren nach Anspruch 1, wobei
das Hinzufügen der K Scheibenbehälter in den N Scheibenbehältern basierend auf einem Bandbreitenverhältnis der ersten Verknüpfung zu der zweiten Verknüpfung Folgendes umfasst:
sequenzielles Zuweisen der K Scheibenbehälter zu der ersten Verknüpfung und der zweiten Verknüpfung basierend auf dem Bandbreitenverhältnis der ersten Verknüpfung zu der zweiten Verknüpfung und der Sequenzkennung, die in jedem Scheibenbehälter umfasst ist, wobei ein Scheibenbehälter, der auf der ersten Verknüpfung zu tragen ist, mindestens ein erster Scheibenbehälter ist und ein Scheibenbehälter, der auf der zweiten Verknüpfung zu tragen ist, mindestens ein zweiter Scheibenbehälter ist; und
Hinzufügen des ersten Scheibenbehälters zu der ersten Verknüpfung und Hinzufügen des zweiten Scheibenbehälters zu der zweiten Verknüpfung.

4. Verfahren nach Anspruch 1, wobei das Hinzufügen der K Scheibenbehälter in den N Scheibenbehältern basierend auf einem Bandbreitenverhältnis der ersten Verknüpfung zu der zweiten Verknüpfung Folgendes umfasst:
Bestimmen, basierend auf dem Bandbreitenverhältnis der ersten Verknüpfung zu der zweiten Verknüpfung und N, der Anzahl an Scheibenbehältern, die auf der ersten Verknüpfung zu tragen ist, und der Anzahl an Scheibenbehältern, die auf der zweiten Verknüpfung zu tragen ist, wobei die Anzahl an Scheibenbehältern, die auf der ersten Verknüpfung zu tragen ist, eine erste Anzahl ist und die Anzahl an Scheibenbehältern, die auf der zweiten Verknüpfung zu tragen ist, eine zweite Anzahl ist; und
Hinzufügen von Scheibenbehältern der ersten Anzahl zu der ersten Verknüpfung und Hinzufügen von Scheibenbehältern der zweiten Anzahl zu der zweiten Verknüpfung.

5. Verfahren nach einem der Ansprüche 1 bis 4, wobei das Verfahren nach dem Bestimmen, basierend auf der Gesamtbandbreite der N Scheibenbehälter und einer verfügbaren Verknüpfungsressource, von M Verknüpfungen zum Tragen der N Scheibenbehälter ferner Folgendes umfasst:
Aktualisieren von M basierend auf der Gesamtbandbreite der N Scheibenbehälter und der verfügbaren Verknüpfungsressource, wobei das aktualisierte M gleich M vor der Aktualisierung plus A ist oder das aktualisierte M gleich M vor der Aktualisierung minus B ist, A eine Ganzzahl größer als oder gleich 1 ist und B eine Ganzzahl größer als oder gleich 1 ist.

6. Datenübertragungsgerät, umfassend:
eine erste Bestimmungseinheit (1201), die dazu konfiguriert ist, eine Gesamtbandbreite von N Scheibenbehältern basierend auf einer Referenzeinheit zu bestimmen (401), wobei die Referenzeinheit eine Mindestbandbreite eines Dienstes zum Übertragen von Daten ist, die Gesamtbandbreite der N Scheibenbehälter ein ganzzahliges Vielfaches der Referenzeinheit ist, jeder Scheibenbehälter Scheibendaten umfasst, die Scheibendaten Daten sind, die erlangt werden, nachdem eine Scheibenverarbeitung an den Daten durchgeführt wird, und N eine Ganzzahl größer als oder gleich 2 ist;
eine zweite Bestimmungseinheit (1202), die dazu konfiguriert ist, basierend auf der Gesamtbandbreite der N Scheibenbehälter und einer verfügbaren Verknüpfungsressource, M Verknüpfungen zum Tragen der N Scheibenbehälter zu bestimmen (402), wobei M eine Ganzzahl größer als oder gleich 1 ist; und
eine Sendeeinheit (1203), die dazu konfiguriert ist, die N Scheibenbehälter zu den M Verknüpfungen hinzuzufügen (403) und die Daten über die unterschiedlichen Verknüpfungen an ein Empfangsende (1401, 1402) zu senden;
**dadurch gekennzeichnet, dass**
jeder Scheibenbehälter ferner eine Sequenzkennung umfasst, die Sequenzkennung durch Codieren der N Scheibenbehälter gemäß einer voreingestellten Regel erlangt wird und die Sequenzkennung dazu verwendet wird, eine Sortierung (404) der N Scheibenbehälter anzugeben;
wobei die M Verknüpfungen eine erste Verknüpfung und eine zweite Verknüpfung umfassen; und
beim Hinzufügen der N Scheibenbehälter zu den M Verknüpfungen die Sendeeinheit speziell dazu konfiguriert ist, K Scheibenbehälter in den N Scheibenbehältern basierend auf einem Bandbreitenverhältnis der ersten Verknüpfung zu der zweiten Verknüpfung hinzuzufügen, wobei eine Anzahl an Scheibenbehältern, die auf der ersten Verknüpfung zu tragen ist, und eine Anzahl an Scheibenbehältern, die auf der zweiten Verknüpfung zu tragen ist, basierend auf dem Bandbreitenverhältnis der ersten Verknüpfung zu der zweiten Verknüpfung bestimmt werden und K ≤ N.

7. Gerät nach Anspruch 6, wobei jeder Scheibenbehälter ferner eine Verknüpfungskennung umfasst und die Verknüpfungskennung eine Kennung einer Verknüpfung zum Tragen jedes Scheibenbehälters ist.

8. Gerät nach Anspruch 6, wobei
die Sendeeinheit speziell zu Folgendem konfiguriert ist: sequenziellem Zuweisen der K Scheibenbehälter zu der ersten Verknüpfung und der zweiten Verknüpfung basierend auf dem Bandbreitenverhältnis der ersten Verknüpfung zu der zweiten Verknüpfung und der Sequenzkennung, die in jedem Scheibenbehälter umfasst ist, wobei ein Scheibenbehälter, der auf der ersten Verknüpfung zu tragen ist, mindestens ein erster Scheibenbehälter ist und ein Scheibenbehälter, der auf der zweiten Verknüpfung zu tragen ist, mindestens ein zweiter Scheibenbehälter ist; und Hinzufügen des ersten Scheibenbehälters zu der ersten Verknüpfung und Hinzufügen des zweiten Scheibenbehälters zu der zweiten Verknüpfung.

9. Gerät nach Anspruch 5, wobei
die Sendeeinheit speziell zu Folgendem konfiguriert ist: Bestimmen, basierend auf dem Bandbreitenverhältnis der ersten Verknüpfung zu der zweiten Verknüpfung und N, der Anzahl an Scheibenbehältern, die auf der ersten Verknüpfung zu tragen ist, und der Anzahl an Scheibenbehältern, die auf der zweiten Verknüpfung zu tragen ist, wobei die Anzahl an Scheibenbehältern, die auf der ersten Verknüpfung zu tragen ist, eine erste Anzahl ist und die Anzahl an Scheibenbehältern, die auf der zweiten Verknüpfung zu tragen ist, eine zweite Anzahl ist; und Hinzufügen von Scheibenbehältern der ersten Anzahl zu der ersten Verknüpfung und Hinzufügen von Scheibenbehältern der zweiten Anzahl zu der zweiten Verknüpfung.

10. Gerät nach Anspruch 6, wobei das Gerät ein Datenübertragungsgerät ist, umfassend einen Prozessor (301), einen Speicher (302) und ein optisches Modul (303), wobei das optische Modul (303) mit dem Prozessor (301) gekoppelt ist und das optische Modul (303) die Sendeeinheit darstellt.

11. Datenübertragungssystem, wobei das Datenübertragungssystem ein Übertragungsende (1201, 1202, 1203, 1204) und ein Empfangsende (1401, 1402) umfasst, wobei
das Übertragungsende das Datenübertragungsgerät nach Anspruch 6-10 ist; und
das Empfangsende zu Folgendem konfiguriert ist: Empfangen (403) der N Scheibenbehälter, die durch das Übertragungsende zu den M Verknüpfungen hinzugefügt sind, und Sortieren (404) der N Scheibenbehälter, um die Daten zu erlangen.

## Revendications

1. Procédé de transmission de données, dans lequel le procédé est appliqué à un réseau de transport optique, et le procédé comprend :
la détermination (401) de la bande passante totale de N conteneurs de tranches sur la base d'une unité de référence, dans lequel l'unité de référence est une bande passante minimale d'un service de transmission de données, la bande passante totale des N conteneurs de tranches est un multiple entier de l'unité de référence, chaque conteneur de tranches comprend des données de tranches, les données de tranches sont des données obtenues une fois le traitement de tranches effectué sur les données, et N est un entier supérieur ou égal à 2 ;
la détermination (402), sur la base de la bande passante totale des N conteneurs de tranches et d'une ressource de liaison disponible, de M liaisons destinées à transporter les N conteneurs de tranches, dans lequel M est un entier supérieur ou égal à 1 ; et
l'ajout (403) des N conteneurs de tranches aux M liaisons, et
l'envoi des données à une extrémité de réception (1401, 1402) à travers les différentes liaisons, **caractérisé en ce que**,
chaque conteneur de tranches comprend également un identifiant de séquence, l'identifiant de séquence est obtenu en codant les N conteneurs de tranches selon une règle prédéfinie, et
l'identifiant de séquence est utilisé pour indiquer le tri (404) des N conteneurs de tranches ;
dans lequel les M liaisons comprennent une première liaison et une seconde liaison ; et
l'ajout des N conteneurs de tranches aux M liaisons comprend :
l'ajout de K conteneurs de tranches dans les N conteneurs de tranches sur la base d'un rapport de bande passante de la première liaison à la seconde liaison, dans lequel une quantité de conteneurs de tranches à transporter sur la première liaison et une quantité de conteneurs de tranches à transporter sur la seconde liaison sont déterminées sur la base du rapport de bande passante de la première liaison à la seconde liaison, et K ≤ N.

2. Procédé selon la revendication 1, dans lequel chaque conteneur de tranches comprend également un identifiant de liaison, et l'identifiant de liaison est un identifiant d'une liaison destinée à transporter chaque conteneur de tranches.

3. Procédé selon la revendication 1, dans lequel
l'ajout de K conteneurs de tranches dans les N conteneurs de tranches sur la base d'un rapport de bande passante de la première liaison à la seconde liaison comprend :
l'attribution séquentielle des K conteneurs de tranches à la première liaison et à la seconde liaison sur la base du rapport de bande passante de la première liaison à la seconde liaison et de l'identifiant de séquence compris dans chaque conteneur de tranches, dans lequel un conteneur de tranches à transporter sur la première liaison est au moins un premier conteneur de tranches, et un conteneur de tranches à transporter sur la seconde liaison est au moins un second conteneur de tranches ; et
l'ajout du premier conteneur de tranches à la première liaison, et l'ajout du second conteneur de tranches à la seconde liaison.

4. Procédé selon la revendication 1, dans lequel l'ajout de K conteneurs de tranches dans les N conteneurs de tranches sur la base d'un rapport de bande passante de la première liaison à la seconde liaison comprend :
la détermination, sur la base du rapport de bande passante de la première liaison à la seconde liaison et de N, de la quantité de conteneurs de tranches à transporter sur la première liaison et la quantité de conteneurs de tranches à transporter sur la seconde liaison, dans lequel la quantité de conteneurs de tranches à transporter sur la première liaison est une première quantité, et la quantité de conteneurs de tranches à transporter sur la seconde liaison est une seconde quantité ; et
l'ajout de conteneurs de tranches de la première quantité à la première liaison, et l'ajout de conteneurs de tranches de la seconde quantité à la seconde liaison.

5. Procédé selon l'une quelconque des revendications 1 à 4, dans lequel après la détermination, sur la base de la bande passante totale des N conteneurs de tranches et d'une ressource de liaison disponible, de M liaisons destinées à transporter les N conteneurs de tranches, le procédé comprend également :
la mise à jour de M sur la base de la bande passante totale des N conteneurs de tranches et de la ressource de liaison disponible, dans lequel M mis à jour est égal à M avant la mise à jour plus A, ou M mis à jour est égal à M avant la mise à jour moins B, A est un entier supérieur ou égal à 1, et B est un entier supérieur ou égal à 1.

6. Appareil de transmission de données, comprenant :
une première unité de détermination (1201), configurée pour déterminer (401) une bande passante totale de N conteneurs de tranches sur la base d'une unité de référence, dans lequel l'unité de référence est la bande passante minimale d'un service de transmission de données, la bande passante totale des N conteneurs de tranches est un multiple entier de l'unité de référence, chaque conteneur de tranches comprend des données de tranches, les données de tranches sont des données obtenues une fois le traitement de tranches effectué sur les données, et N est un entier supérieur ou égal à 2 ;
une seconde unité de détermination (1202), configurée pour déterminer (402), sur la base de la bande passante totale des N conteneurs de tranches et d'une ressource de liaison disponible, M liaisons pour transporter les N conteneurs de tranches, dans lequel M est un entier supérieur ou égal à 1 ; et
une unité d'envoi (1203), configurée pour ajouter (403) les N conteneurs de tranches aux M liaisons, et envoyer les données à une extrémité de réception (1401, 1402) via les différentes liaisons ;
**caractérisé en ce que**
chaque conteneur de tranches comprend également un identifiant de séquence, l'identifiant de séquence est obtenu en codant les N conteneurs de tranches selon une règle prédéfinie, et l'identifiant de séquence est utilisé pour indiquer le tri (404) des N conteneurs de tranches ;
dans lequel les M liaisons comprennent une première liaison et une seconde liaison ; et
lors de l'ajout de N conteneurs de tranches dans les M liaisons, l'unité d'envoi est spécifiquement configurée pour ajouter des K conteneurs de tranches dans les N conteneurs de tranches sur la base d'un rapport de bande passante de la première liaison à la seconde liaison, dans lequel une quantité de conteneurs de tranches à transporter sur la première liaison et une quantité de conteneurs de tranches à transporter sur la seconde liaison sont déterminées sur la base du rapport de bande passante de la première liaison à la seconde liaison, et K ≤ N.

7. Appareil selon la revendication 6, dans lequel chaque conteneur de tranches comprend également un identifiant de liaison, et l'identifiant de liaison est un identifiant d'une liaison destinée à transporter chaque conteneur de tranches.

8. Appareil selon la revendication 6, dans lequel
l'unité d'envoi est spécifiquement configurée pour : attribuer séquentiellement les K conteneurs de tranches à la première liaison et à la seconde liaison sur la base du rapport de bande passante de la première liaison à la seconde liaison et de l'identifiant de séquence compris dans chaque conteneur de tranches, dans lequel un conteneur de tranches à transporter sur la première liaison est au moins un premier conteneur de tranches, et un conteneur de tranches à transporter sur la seconde liaison est au moins un second conteneur de tranches ; et ajouter le premier conteneur de tranches à la première liaison, et ajouter le second conteneur de tranches à la seconde liaison.

9. Appareil selon la revendication 5, dans lequel
l'unité d'envoi est spécifiquement configurée pour : déterminer, sur la base du rapport de bande passante de la première liaison à la seconde liaison et de N, la quantité de conteneurs de tranches à transporter sur la première liaison et la quantité de conteneurs de tranches à transporter sur la seconde liaison, dans lequel la quantité de conteneurs de tranches à transporter sur la première liaison est une première quantité, et la quantité de conteneurs de tranches à transporter sur la seconde liaison est une seconde quantité ; et ajouter des conteneurs de tranches de la première quantité à la première liaison, et ajouter des conteneurs de tranches de la seconde quantité à la seconde liaison.

10. Appareil selon la revendication 6, dans lequel l'appareil est un appareil de transmission de données, comprenant un processeur (301), une mémoire (302), et un module optique (303), dans lequel le module optique (303) est couplé au processeur (301), et le module optique (303) constitue l'unité d'envoi.

11. Système de transmission de données, dans lequel le système de transmission de données comprend une extrémité de transmission (1201, 1202, 1203, 1204) et une extrémité de réception (1401, 1402), dans lequel
l'extrémité de transmission est l'appareil de transmission de données selon les revendications 6 à 10 ; et
l'extrémité de réception est configurée pour : recevoir (403) les N conteneurs de tranches ajoutés par l'extrémité de transmission aux M liaisons, et trier (404) les N conteneurs de tranches pour obtenir les données.
